# NEUE EUROPÄISCHE PATENTSCHRIFT

(11) **EP 0 591 645 B2**
(45) Veröffentlichungstag und Bekanntmachung des Hinweises auf die Entscheidung über den Einspruch: **13.01.1999**
(45) Hinweis auf die Patenterteilung: 24.01.1996
(21) Anmeldenummer: 93112790.6
(22) Anmeldetag: 10.08.1993
(51) Int. Cl.: C04B 26/02, E04F 13/04

(54) **Unterputz und Verfahren seiner Aufbringung**
Sub-plaster and method for depositing it
Sous-enduit et son procédé de dépôt

(30) Priorität: 13.08.1992 DE 4226803
(43) Veröffentlichungstag der Anmeldung: 13.04.1994
(73) Patentinhaber: KOCH MARMORIT GmbH, 79283 Bollschweil (DE)
(72) Erfinder: Paul, Friedrich, D-79588 Efringen-Kirchen (DE)
(74) Vertreter: Werner, Hans-Karsten, Dr.Dipl.-Chem.

(56) Entgegenhaltungen:
- CH-A- 672 808
- DE-A- 1 671 159
- DE-A- 2 836 855
- DE-C- 2 817 200
- FR-A- 2 175 056
- FR-A- 2 206 470
- FR-A- 2 271 268
- US-A- 4 373 058

## Beschreibung

Unterputz wird bisher hergestellt aus hydraulisch abbindenden Materialien mit mineralischen oder organischen Füllstoffen. Dieser Unterputz muß nach dem Auftrag abbinden und ausreichend abtrocknen bevor der endgültige Deckputz aufgetragen werden kann. Dies bedeutet, daß die entsprechenden Gerüste über längere Zeit benötigt werden und daß Fenster und Türen mehrfach abgeklebt werden müssen. Eingänge werden durch das Gerüst für längere Zeit blockiert.

Aus der DE-C-28 17 200 ist eine Wärmedämmschicht auf Basis von Schaumstoffteilchen, Bindemittel und Verarbeitungshilfsstoffen bekannt, wobei organische, geschlossenzellige Schaumstoffteilchen, Bindemittel und Verarbeitungshilfsstoffe zum Einsatz kommen, die ein Gemisch aus einer wäßrigen Dispersion eines Copolymerisats einer minimalen Filmbildetemperatur von höchstens 10°C, Vorkondensaten von Harnstoff-Formaldehydharzen und/oder Vorkondensaten von Melamin-Formaldehydharzen und einem Härter für die Vorkondensate oder Zement als Bindemittel sowie feinteilige quellend wirkende Trocknungsmittel und wasserlösliche Thixotropierungsmittel enthalten. Diese Wärmedämmschichten können zwar bezüglich ihrer Wasserdampfdurchlässigkeit eingestellt werden, bedürfen aber stets der Austrocknung und sollen eine Wärmedämmschicht und kein Unterputz sein.

Aus der DE-A-28 36 855 ist eine verbesserte Wärmedämmschicht ebenfalls auf Basis organischer geschlossenzelliger wasserdichter Schaumstoffteilchen, Bindemittel, Verarbeitungshiifsstoffen, Zuschlägen und Zusätzen bekannt, bei der die Bindemittel aus einer wäßrigen Dispersion eines Copolymerisats einer minimalen Filmbildetemperatur von höchstens 10°C und einem Tonerdeschmelzzement bestehen sowie als Verarbeitungshilfsstoffe Zuschläge und Zusätze erforderlich sind feinteilige quellend wirksame Trocknungshilfsmittel, wasserlösliche Thixotropierungsmittel und Soforthaftungs- und Luftporenstabilisierungsmittel. Auch hierbei handelt es sich um Wärmedämmschichten und nicht um einen Unterputz. Auch diese Schichten müssen nach der Verfestigung austrocknen und können erst dann weiterverarbeitet werden.

Die vorliegende Erfindung hat sich die Aufgabe gestellt, einen neuen Unterputz zur Verfügung zu stellen, der den bisher verwendeten mineralischen Unterputz ersetzt, dabei rascher abbindet, bessere bauphysikalische Eigenschaften aufweist und schon nach einigen Stunden mit dem endgültigen Deckputz versehen werden kann. Dabei soll der neue Unterputz ohne Vorbereitung auf Dämmplatten, unterschiedlichen Steinuntergründen usw. aufgebracht werden und ohne zusätzliche mechanische Befestigung haften, so daß auf das Einlegen von Armiergeweben mit teuren Spezialklebern verzichtet werden kann oder sonstige arbeitsintensive Schritte unterbleiben können. Schließlich soll die Rißanfälligkeit geringer sein als bei herkömmlichen Unterputzen, so daß die bei Neubauten häufig zu beobachtenden Setzrisse nicht zu einem Reißen des Unterputzes und des Deckputzes führen.

Diese Aufgabe kann überraschend einfach und gut gelöst werden durch einen Unterputz bestehend aus einem ausgehärteten Reaktionsharz und einem Füllstoff bestehend aus einem vorzugsweise runden Monokorn möglichst enger Korngrößenverteilung, wobei die Durchschnittsgröße des Monokorns im Bereich von 2 bis 6 mm, vorzugsweise 3 bis 5 mm liegt. Als Monokorn kommen in Frage, Bruchkorn (Kalkstein-Brechsand) sehr enger Siebfraktionen, Rundkorn (Quarz, Flußsand) sehr enger Siebfraktionen, geblähte Perlite, oder Blähtonkugeln mit möglichst geringen Mengen Überkorn und Unterkorn.

Für die vorliegende Erfindung ist als Monokorn mit möglichst enger Korngrößenverteilung geeignet jedes Material, welches gemäß DIN 66 145 einen Parameter n (Steigung der RRSB-Geraden) von mindestens 9 aufweist. Bei der Ermittlung des Parameters n können je 1 % Überkorn und Unterkorn unberücksichtigt bleiben. Dann haben beispielsweise Siebfraktionen von 2 bis 4 oder 3 bis 6 den Parameter n ≥ 9. Die Siebfraktionen 3 bis 5 und 4 bis 6 haben einen Parameter n größer als 12.

Als Kunstharz kommen vor allem in Frage, ein- oder mehrkomponentige Reaktionsharze, welche ausreichend rasch aushärten.

Es genügt eine oberflächliche Benetzung des Rundkorns mit dem Reaktionsharz, um eine ausreichende Verklebung der Körner untereinander und mit dem zu verputzenden Untergrund zu gewährleisten.

Mehrkomponentige Reaktionsharze lassen sich so einstellen, daß sie im Bereich von wenigen Minuten bis wenigen Stunden aushärten. Als einkomponentige Reaktionsharze kommen vor allem UV-Licht-härtbare Harze in Frage. Da eine ausreichende Aushärtung auch am zu verputzenden Untergrund und der Rückseite des Monokorns notwendig ist, kommen vor allen Dingen UV-Licht-durchlässige Materialien in Frage. Quarz und Flußsand weisen beispielsweise eine solche UV-Licht-Durchlässigkeit auf. Der Vorteil von UV-Licht-gehärteten einkomponentigen Reaktionsharzen besteht darin, daß sie bis zur UV-Licht-Bestrahlung längere Zeit ungestört verarbeitet und verstrichen werden können und erst nach der UV-Licht-Bestrahlung aushärten. Es ist jedoch ebenso gut möglich, mehrkomponentige Reaktionsharze so einzustellen, daß sie gut aufgetragen und verstrichen werden können ehe sie aushärten.

Die erfindungsgemäße Aufbringung des Unterputzes erfolgt im allgemeinen in der Weise, daß aus einem Silo oder einem Silofahrzeug das jeweilige Monokorn auf der Baustelle mittels Druckluft auf die gewünschte Gerüstlage gefördert wird. Dort wird es mit dem Reaktionsharz vermischt und auf den zu verputzenden Untergrund aufgetragen. Dabei ist es sogar möglich, das Monokorn einerseits und das Bindemittel andererseitsgetrennt einer kleinen Mischkammer zuzuführen, aus der das mit dem Reaktionsharz benetzte Material ausgetragen und auf den Untergrund aufgetragen wird. Je nach Größe der Baustelle ist es möglich, das Reaktionsharz oder die Komponenten des Reaktionsharzes durch Schlauchleitungen zur Mischkammer zu pumpen oder aber auf dem Gerüst geeignete kleinere Bindemitteltanks aufzustellen. Bei mehrkomponentigen Reaktionsharzen sind die beiden Komponenten selbstverständlich getrennt der Mischkammer zuzuführen. Bei einkomponentigen Reaktionsharzen ist es notwendig, nach dem Verstreichen des Unterputzes diesen mit einer geeigneten UV-Lampe auszuhärten. Es kann somit je nach zur Verfügung stehendem Monokorn einerseits und Art und Größe der Baustelle andererseits sowie gegebenenfalls in Abhängigkeit von Temperatur und Wettersituation das eine oder andere Reaktionsharz zur Anwendung kommen.

Vorteil aller Varianten des Verfahrens ist, daß durch den Auftrag des Unterputzes nicht mehr unnötige Wassermengen auf einen in der Trocknung befindlichen Rohbau aufgebracht werden müssen. Der anschließend aufgetragene mineralische Deckputz enthält zwar nach wie vor einen Wasserüberschuß, dieser trocknet jedoch ausschließlich und rasch nach außen ab und ist daher unschädlich, da der neue Unterputz keine wassersaugende Verbindung zum Mauerwerksuntergrund besitzt.

Ein weiterer Vorteil des neuen Unterputzes besteht darin, daß der Deckputz sich mit dem Unterputz stark verkrallt, da die grobe Oberflächenstruktur und die Hinterschneidung zu einer festen und dauerhaften Verankerung führt.

Der neue Unterputz kann auf den verschiedensten Untergründen und so auch auf eingelegten Dämmplatten oder den verschiedensten Steinuntergründen aufgebracht werden und benötigt keine zusätzliche mechanische Befestigung. Es kann daher auf das bisher übliche Einlegen von Armiergeweben mit teuren Spezialklebern verzichtet werden, zumal dies sehr arbeitsintensiv und somit zeitraubend ist.

Der neue Unterputz bringt hervorragende bauphysikalische Werte, da durch die nur punktuelle Verklebung die Wasserdampfdiffusionsfähigkeit insbesondere der Außenwand voll erhalten bleibt. Da der Elastizitätsmodul des Harzes einstellbar ist, entsteht ein zäh-elastisches, nicht sprödes und damit extrem gering rißanfälliges Unterputzsystem. Dieser Unterputz ist somit sogar in der Lage, kleinere Mauersetzrisse zu kompensieren, so daß sie im Deckputz nicht in Erscheinung treten.

Sowohl für den Handwerker als auch für den Bauherrn ergeben sich erhebliche Zeit- und Kostenvorteile, da der mineralische Deckputz schon nach kürzester Zeit auf den Unterputz aufgebracht werden kann. So können erfindungsgemäß zwei Kolonnen unmittelbar hintereinander arbeiten, wobei die erste Kolonne den Unterputz und die zweite Kolonne den Deckputz aufbringt. Das leidige Abkleben von Fenstern und Türen erfolgt nur einmal. Die Eingänge werden praktisch nur einen Tag durch das Gerüst blockiert. Die Standzeiten für die Gerüste werden deutlich verkürzt.

Da die Aufbringung des neuen Unterputzes eine neue Technologie darstellt, die den Erwerb neuer Kenntnisse und Erfahrungen der Handwerker erforderlich machen, bietet es sich an, hierfür Spezialkolonnen auszubilden, die als mobile Einheiten von Baustelle zu Baustelle fahren und in Abstimmung mit den herkömmlichen Handwerkern zur Erstellung des Unterputzes zum Einsatz kommen. Hierbei ist es durchaus möglich, daß der Deckputz mit wechselnden zeitlichen Abständen auf den Unterputz aufgebracht wird. So kann einerseits mit einem zeitlichen Abstand von Minuten oder Stunden gearbeitet werden, es schadet jedoch nicht, wenn Teile des Unterputzes erst mit einer zeitlichen Verzögerung von einigen Tagen aufgebracht werden. Es besteht somit nicht die Notwendigkeit, unbedingt den gesamten Deckputz am gleichen Arbeitstag aufzubringen, an dem der Unterputz aufgebracht wurde. Dies erhöht die zeitliche Beweglichkeit der Handwerker, die für den Deckputz verantwortlich sind.

## Patentansprüche

1. Unterputz bestehend aus einem ausgehärteten ein- oder mehrkomponentigen Reaktionsharz und einem Füllstoff bestehend aus einem vorzugsweise runden Monokorn möglichst enger Korngrößenverteilung definiert durch den Parameter n ≥ 9, ermittelt nach DIN 66 145, unter Vernachlässigung von je 1 % Über- und Unterkorn und wobei die Durchschnittsgröße des Monokorns im Bereich von 2 bis 6 mm liegt und das Monokorn aus Bruchkorn (Kalkstein-Brechsand), Rundkorn (Quarz, Flußsand), geblähtem Perlite oder Blähtonkugeln besteht.

2. Unterputz gemäß Anspruch 1, dadurch gekennzeichnet, daß die Durchschnittsgröße des Monokorns 3 bis 5 mm beträgt.

3. Verfahren zur Aufbringung eines Unterputzes, dadurch gekennzeichnet, daß ein Füllstoff bestehend aus einem vorzugsweise runden Monokorn möglichst enger Korngrößenverteilung definiert durch den Parameter n ≥ 9, ermittelt nach DIN 66 145, unter Vernachlässigung von je 1 % Über- und Unterkorn und, wobei die Durchschnittsgröße des Monokorns im Bereich von 2 bis 6 mm liegt und das Monokorn aus Bruchkorn (Kalkstein-Brechsand), Rundkorn (Quarz, Flußsand), geblähtem Perlite oder Blähtonkugeln besteht, an der Baustelle mit einem ein- oder mehrkomponentigen Reaktionsharz benetzt, auf die zu verputzende Wandfläche aufgebracht und ausgehärtet wird.

4. Verfahren gemäß Anspruch 3, dadurch gekennzeichnet, daß die Durchschnittsgröße des Monokorns 3 bis 5 mm beträgt.

## Claims

1. A rendering composition consisting of a cured one-component or more-component reaction resin and a filler consisting of preferably round monograin of as narrow as possible a grain size distribution defined by the parameter n ≥ 9, established according to DIN 66 145, with neglecting of each 1% of larger and smaller grains, the average size of said monograin being in the range of from 2 to 6 mm, said monograin consisting of broken grain (limestone broken sand), round grain (quartz, drift sand), expanded perlite, or swelling clay beads.

2. The rendering composition according to claim 1, characterized in that the average size of said monograin is from 3 to 5 mm.

3. A method for applicating a rendering, characterized in that on the building site a filler consisting of preferably round monograin of as narrow as possible a grain size distribution defined by the parameter n ≥ 9, established according to DIN 66 145, with neglecting of each 1% of larger and smaller grains, the average size of said monograin being in the range of from 2 to 6 mm, said monograin consisting of broken grain (limestone broken sand), round grain (quartz, drift sand), expanded perlite, or swelling clay beads, is wetted with a one-component or more-component reaction resin, applicated onto the wall area to be rendered, and cured.

4. The method according to claim 3, characterized in that the average size of said monograin is from 3 to 5 mm.

## Revendications

1. Sous-enduit, constitué d'une résine réactionnelle durcie à un ou plusieurs composants et d'une matière de charge constituée de monograins de préférence ronds, ayant une distribution de taille des grains la plus étroite possible, telle que définie par le paramètre n ≥ 9 déterminé selon la norme DIN 66 145 lorsqu'on néglige chaque fois 1 % de grains plus gros et plus petits, et dans lequel la dimension moyenne des monograins se situe dans la gamme de 2 à 6 mm, les monograins étant constitués de grains concassés (sable calcaire concassé), de grains ronds (quartz, sable de rivière), de perlite expansée ou de billes d'argile expansée.

2. Sous-enduit selon la revendication 1, caractérisé en ce que la dimension moyenne des monograins est comprise entre 3 et 5 mm.

3. Procédé pour appliquer un sous-enduit, caractérisé en ce qu'une charge constituée de monograins, de préférence ronds, ayant une distribution de la taille des grains la plus étroite possible telle que définie par le paramètre n ≥ 9, déterminée par la norme DIN 66 145 lorsqu'on néglige chaque fois 1 % de grains plus gros et de grains plus petits, la taille moyenne des monograins étant comprise dans la gamme de 2 à 6 mm, et les monograins étant constitués de grains concassés (sable calcaire concassé), de grains ronds (quartz, sable de rivière), de perlite expansée ou de billes d'argile expansée, est mouillée sur le chantier par une résine réactionnelle à un ou plusieurs composants, est appliqué sur la surface du mur à enduire, et durcit sur cette surface.

4. Procédé selon la revendication 3, caractérisé en ce que la dimension moyenne des monograins est comprise entre 3 et 5 mm.
